# FASCICULE DE BREVET EUROPEEN

(11) **EP 1 076 411 B1**
(45) Date de publication et mention de la délivrance du brevet: **05.10.2011**
(21) Numéro de dépôt: 00402258.8
(22) Date de dépôt: 09.08.2000
(51) Int. Cl.: H02P 9/30

(54) **Dispositif de production d'électricité**
Vorrichtung zur Produktion von Elektrizität
Electricity production device

(30) Priorité: 09.08.1999 FR 9910324
(43) Date de publication de la demande: 14.02.2001
(73) Titulaire: MOTEURS LEROY-SOMER, 16000 Angoulême (FR)
(72) Inventeur: Giraud, Régis, 16000 Angouleme (FR); Andrieux, Christian, 16000 Angouleme (FR); Coupart, Eric, 16000 Angouleme (FR)
(74) Mandataire: Tanty, François

(56) Documents cités:
- DE-A- 19 845 569
- GB-A- 2 289 581
- JP-A- 07 163 111
- US-A- 4 825 139
- US-A- 4 934 822
- US-A- 5 793 625

## Description

La présente invention concerne le domaine de la production d'électricité à bord de véhicules ou de containers par exemple, au moyen d'un alternateur, d'un redresseur et d'un hacheur survolteur.

Un grand nombre de dispositifs de production d'électricité embarqués ont été proposés, avec notamment pour objectif de diminuer le poids de l'équipement.

On a proposé de nombreux dispositifs dans lesquels le hacheur survolteur utilise l'inductance propre de l'alternateur, ce qui permet d'éviter l'utilisation d'un bobinage propre au hacheur.

On connaît notamment par la demande DE-A-198 45 569 et GB-A-2289581 un dispositif comportant un alternateur triphasé conventionnel, un redresseur, un hacheur survolter et un hacheur demi-pont correspondant en aval du redresseur.

Un tel dispositif est relativement complexe et limité en puissance.

On connaît également par le brevet US-A-5793625 un dispositif de 100 W de puissance, dans lequel l'alternateur est conventionnel et le hacheur survolteur comporte plusieurs transistors FET opérant à une très haute fréquence de commutation.

On connaît encore par le brevet US-A-4825139 un dispositif dans lequel l'alternateur est conventionnel, le hacheur survolteur utilisant plusieurs transistors MOS.

Ces dispositifs connus n'offrent pas entière satisfaction, étant de structure relativement complexe et non adaptés à délivrer des puissances de l'ordre du kW au moins.

On utilise uniquement dans le domaine automobile, à la connaissance de la demanderesse, des alternateurs quatre pôles, présentant l'avantage d'être simples à fabriquer et de délivrer un courant à une fréquence relativement basse, donc avec de faibles pertes dans le circuit magnétique.

En effet, d'une manière générale, les pertes dans le circuit magnétique augmentent avec la fréquence de l'onde du courant, donc avec le nombre de pôles.

De plus, à valeur d'inductance constante, la chute de tension par phénomène d'empiétement dans les diodes du redresseur augmente avec la fréquence du courant délivré par l'alternateur, ce qui incite à utiliser un faible nombre de pôles.

Par ailleurs, l'avantage de faire fonctionner le hacheur survolteur avec une fréquence de commutation très élevée est de réduire le niveau des harmoniques de courant et par conséquent l'échauffement de l'alternateur.

Il existe un besoin pour disposer d'un dispositif permettant de générer une puissance relativement élevée avec un rendement satisfaisant, la puissance étant typiquement comprise entre 1 et 30 kW, fiable et de faible poids, capable d'être embarqué sur un véhicule ou un container par exemple.

La présente invention a ainsi pour objet un nouveau dispositif de production d'électricité selon la revendication 1.

De préférence, on utilise un alternateur ayant huit pôles et une fréquence de commutation inférieure à 10 kHz, de préférence inférieure à 8 kHz et de préférence encore de l'ordre de 7,5 kHz.

La société demanderesse a constaté que l'on pouvait faire fonctionner le dispositif selon l'invention à une telle fréquence de commutation avec un rendement global satisfaisant, le dispositif étant en outre fiable et de construction relativement aisée.

Alors que l'on pouvait s'attendre en augmentant le nombre de pôles de l'alternateur à une dégradation des performances du dispositif, de par l'augmentation des pertes dans le circuit magnétique, il se trouve que de manière surprenante le dispositif selon l'invention présente un coût, un poids et un rendement pleinement compatibles avec son utilisation sur un véhicule ou un container.

Une tentative d'explication réside dans le fait que l'augmentation du nombre de pôles a permis de réduire de manière importante la valeur de l'inductance de l'alternateur et d'apporter un gain sur la chute de tension par empiétement, donc une réduction du courant et des pertes joules de l'alternateur ce qui compense l'augmentation des pertes magnétiques dans l'alternateur due au nombre de pôles plus élevé que celui des alternateurs conventionnels embarqués et l'augmentation des pertes par commutation dans le hacheur.

De préférence, l'inductance en % propre par phase de l'alternateur, définie par la formule LωI_{N}/V₀, où L est l'inductance propre de l'alternateur, ω la pulsation, I_{N} le courant nominal à une vitesse donnée, par exemple 1500 trs/mn, et V₀ la tension à vide de l'alternateur à ladite vitesse, est comprise entre 20 et 30 %.

Dans une réalisation préférée correspondant à une puissance de l'ordre de 10 kW, la tension étant de 294 volts entre phases à 3 000 trs/mn, l'inductance par phase de l'alternateur est inférieure ou égale à 2 mH, de préférence inférieure ou égale à 1,5 mH, ce qui correspond à une inductance en % inférieure à 30 %.

Dans une réalisation correspondant à une puissance de l'ordre de 10 kW, la tension étant de 294 volts entre phases à 3 000 trs/mn, l'inductance par phase de l'alternateur est supérieure ou égale à 1 mH, ce qui correspond à une inductance en pourcentage supérieure à 20 %, et la fréquence de commutation est de l'ordre de 5 kHz.

La société demanderesse a constaté que ces valeurs d'inductance et de fréquence permettaient, dans le cas d'un alternateur huit pôles, de maintenir les pertes dues aux harmoniques de courant à un niveau particulièrement faible.

De préférence, l'alternateur est à aimants permanents.

De préférence également, le hacheur est en aval du redresseur, ce qui permet de n'utiliser qu'un seul transistor, par exemple un transistor IGBT.

Ce transistor unique peut être refroidi aisément par circulation d'un liquide, alors que dans les dispositifs connus dont les hacheurs comportent plusieurs transistors, ce refroidissement est rendu plus difficile de par le nombre de transistors, lesquels ne peuvent être montés sur un refroidisseur commun sans poser des problèmes d'isolation.

De préférence, la fréquence de commutation est constante, ce qui simplifie l'électronique de commande.

Dans une réalisation préférée, le hacheur alimente au moins un onduleur commandé par un circuit de commande recevant une information représentative de la vitesse de rotation du rotor de l'alternateur.

Ainsi le circuit de commande peut tenir compte de la puissance disponible pour les appareils reliés à l'onduleur, et commander le fonctionnement de ces derniers en conséquence.

L'invention a encore pour objet un générateur électrique embarqué de puissance comprise entre 1 et 30 kW, caractérisé par le fait qu'il comporte en combinaison un alternateur triphasé huit pôles à aimants permanents, d'inductance en % propre par phase comprise entre 20 et 40 %, de préférence 20 à 30 %, apte à être entraîné en rotation à vitesse variable par un moteur thermique, un redresseur pour générer à partir du courant délivré par l'alternateur un courant redressé et un hacheur survolteur en aval du redresseur, ce hacheur utilisant l'inductance propre de l'alternateur pour élever la tension et utilisant un seul transistor IGBT opérant à une fréquence de commutation de préférence inférieure à 8 kHz, de préférence encore de l'ordre de 7,5 kHz, pour court-circuiter l'alternateur.

L'invention sera mieux comprise à la lecture de la description détaillée qui va suivre, d'un exemple de réalisation non limitatif de l'invention, et à l'examen du dessin annexé sur lequel :
- la figure 1 est un schéma en bloc d'une chaîne énergétique embarquée sur un véhicule automobile et comportant un dispositif de production d'électricité conforme à l'invention,
- la figure 2 est un schéma électrique simplifié du dispositif de production d'électricité selon l'invention,
- la figure 3 représente isolément en perspective l'alternateur, et
- la figure 4 est une vue de côté avec demi-coupe axiale de l'alternateur de la figure 3.

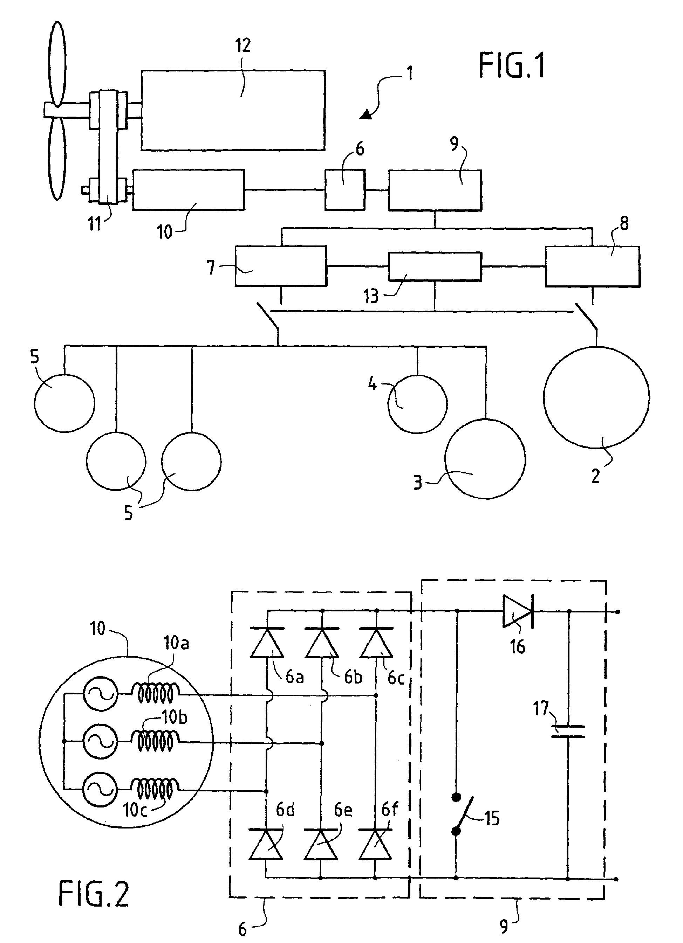

La chaîne énergétique 1 représentée sur la figure 1 comporte différents appareils 2 à 5 entraînés par des moteurs électriques, tels des moto-ventilateurs ou des pompes.

Ces appareils 2 à 5 sont alimentés en courant triphasé de fréquence constante ou variable par deux onduleurs 7 et 8 alimentés en courant continu par un hacheur survolteur 9 relié à un redresseur 6 lui-même relié à un alternateur 10 dont le rotor est entraîné en rotation, par l'intermédiaire d'une transmission 11, par un moteur thermique 12, par exemple un moteur diesel, dont la vitesse de rotation est susceptible de varier, typiquement entre 600 et 3 600 trs/mn.

La transmission 11 permet de multiplier par exemple d'un facteur 2 ou 3 la vitesse de rotation du rotor, de sorte que l'alternateur 10 est entraîné à une vitesse de rotation comprise par exemple entre 1 500 trs/mn lorsque le moteur tourne au ralenti et à plus de 5 000 trs/mn lorsque le moteur 12 tourne à un régime élevé.

La chaîne 1 comporte un circuit de commande 13 recevant une information représentative de la vitesse de rotation du rotor de l'alternateur 10 et commande les différents appareils utilisateurs 2 à 5 en fonction de la puissance disponible au niveau des onduleurs 7 et 8.

L'alternateur 10 est triphasé et comporte trois bobinages 10a, 10b et 10c, chacun d'inductance propre L.

Le redresseur 6 comporte, de façon connue en soi, six diodes 6a à 6f agencées pour délivrer une tension redressée.

Le hacheur survolteur 9 comporte un interrupteur électronique 15 apte à court-circuiter la sortie du redresseur 6, une diode 16 en aval de l'interrupteur 15 et un condensateur de stockage 17 en sortie.

Le hacheur 9 est du type hacheur parallèle et utilise l'inductance propre de l'alternateur 10 pour stocker l'énergie réactive.

Dans l'exemple de réalisation décrit, l'interrupteur électronique 15 est constitué par un seul transistor IGBT, commandé par un circuit électronique de commande en commutation à une fréquence de commutation constante, ce circuit électronique de commande étant réalisé de manière conventionnelle et n'étant pas représenté dans un souci de clarté du dessin.

Le circuit électronique de commande est avantageusement agencé de manière à modifier le rapport cyclique du signal de commande de l'interrupteur électronique 15 en fonction de la tension en sortie du hacheur élévateur 9, de manière à réguler cette tension à une valeur de consigne.

Dans l'exemple particulier de réalisation décrit, la fréquence de commutation est de 5 kHz.

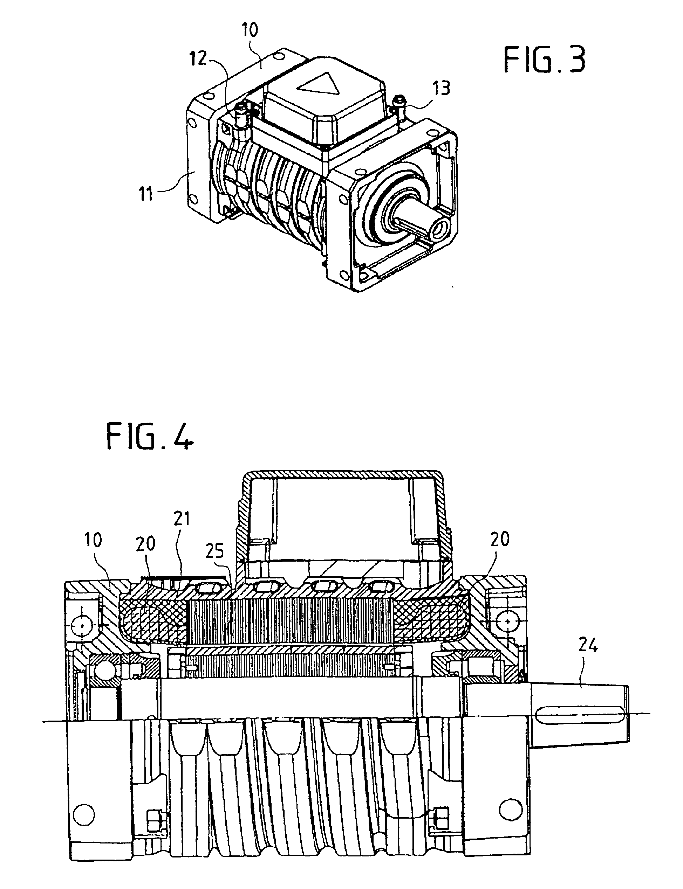

On a représenté isolément sur les figures 3 et 4 l'alternateur 10.

L'alternateur 10 comporte un carter 11 prévu pour être refroidi par un liquide, pourvu à cet effet d'embouts de raccordement 12 et 13 à un circuit d'eau de refroidissement.

L'alternateur 10 est dans l'exemple de réalisation décrit un alternateur triphasé comportant huit pôles, les trois bobinages 10a, 10b et 10c étant bobinés chacun de manière conventionnelle dans des encoches du stator 25 de l'alternateur 10, ce dernier comportant au total quarante-huit encoches.

Le rotor 24 comporte dans l'exemple de réalisation décrit des aimants permanents, au nombre de quatre par pôle.

De préférence, on utilise des aimants à champ rémanent assez faible mais avec une bonne coercitivité (Bᵣ voisin de 1,1T nominal à 20 °C et H_{cj} voisin de 900 kA/m nominal à 150 °C).

L'épaisseur des aimants utilisés est égale à 5 mm.

De préférence, les tôles du stator sont en alliage de silicium, la longueur des fers étant de l'ordre de 115 mm.

Toujours dans l'exemple de réalisation décrit, le nombre de spires est égal à 21.

Par ailleurs, comme on peut le voir sur la figure 4, les têtes de chignon 20 formées par les fils des bobinages à l'extérieur des fers du stator faisant saillie de part et d'autre de ces derniers sont noyées dans une résine conductrice 21, ce qui permet notamment d'en réduire les pertes.

Dans l'exemple de réalisation décrit, la puissance du dispositif est de l'ordre de 10 kW et l'inductance propre L par phase de l'alternateur est de l'ordre de 1,3 mH.

La fréquence de commutation de l'interrupteur électronique 15 et la valeur de l'inductance propre de chaque phase de l'alternateur permettent d'avoir à la fois des pertes par commutation dans l'interrupteur électronique 15 et un niveau d'harmoniques compatibles avec les performances recherchées.

La valeur de l'inductance propre par phase qui est choisie permet d'une part de maintenir les harmoniques à un niveau relativement bas compte tenu de la fréquence de commutation de l'interrupteur électronique et d'autre part d'éviter que la chute de tension due au phénomène d'empiétement s'avère préjudiciable pour la puissance de sortie du hacheur élévateur.

L'inductance en % est choisie entre 20 et 40 %, étant de préférence comprise entre 20 et 30 %.

Bien entendu, l'invention n'est pas limitée à l'exemple de réalisation qui vient d'être décrit.

On peut notamment utiliser comme interrupteur électronique 15 un ou plusieurs composants appropriés capables d'assurer la fonction de mise en court-circuit de la sortie du redresseur ; il est toutefois avantageux d'utiliser un composant unique car ce dernier peut être aisément refroidi par circulation de liquide, alors que dans le cas de composants multiples, le refroidissement par liquide pose des problèmes d'isolation électrique de ces différents composants.

L'enrobage des têtes de chignon du stator de l'alternateur dans une résine conductrice n'est pas indispensable mais présente l'avantage de faciliter le refroidissement des bobinages et d'augmenter la puissance massique de l'alternateur.

De même, l'utilisation d'aimants permanents pour exciter le stator de l'alternateur est une solution préférentielle, mais on ne sort pas du cadre de la présente invention en utilisant une excitation séparée.

On peut placer plusieurs alternateurs 10 côte à côte, entraînés par un axe commun, en vue d'augmenter la puissance délivrée.

Finalement, on dispose grâce à l'invention d'un dispositif de génération électrique de puissance relativement élevée, typiquement comprise entre 1 et 30 kW, de poids relativement faible, fiable et de rendement élevé.

## Revendications

1. Dispositif de production d'électricité destiné notamment à être embarqué sur un véhicule ou un container, comportant un alternateur triphasé (10) apte à être entraîné en rotation à une vitesse variable par un moteur thermique, un redresseur (6) pour générer à partir du courant délivré par l'alternateur (10) un courant redressé et un hacheur survolteur (9) utilisant l'inductance propre de l'alternateur (10) pour élever la tension,
**caractérisé par le fait que** l'alternateur comporte six ou huit pôles, **par le fait que** le hacheur opère avec une fréquence de commutation comprise entre 3 et 15 kHz et **par le fait que** l'inductance en % propre par phase de l'alternateur, définie par la formule LωI_{N}/V₀, est comprise entre 15 et 40 %, où L est l'inductance propre par phase de l'alternateur, ω la pulsation, I_{N} le courant nominal à une vitesse donnée, et V₀ la tension à vide de l'alternateur à cette vitesse.

2. Dispositif selon la revendication précédente, **caractérisé par le fait que** l'alternateur comporte huit pôles.

3. Dispositif selon l'une des revendications précédentes, **caractérisé par le fait que** l'inductance en %, propre par phase de l'alternateur est comprise entre 20 et 30 %.

4. Dispositif selon l'une des revendications précédentes, sa puissance étant de l'ordre de 10 kW, la tension étant de 294 volts entre phases à 3 000 trs/mn, **caractérisé par le fait que** l'inductance propre de l'alternateur par phase est inférieure ou égale à 2 mH, de préférence inférieure ou égale à 1,5 mH.

5. Dispositif selon l'une des revendications précédentes, sa puissance étant de l'ordre de 10 kW, la tension étant de 294 volts entre phases à 3 000 trs/mn, **caractérisé par le fait que** l'inductance propre de l'alternateur par phase est supérieure ou égale à 1 mH.

6. Dispositif selon l'une des revendications précédentes, **caractérisé par le fait que** la fréquence de commutation du hacheur (9) est inférieure à 8 kHz, de préférence de l'ordre de 5 kHz.

7. Dispositif selon la revendication précédente, **caractérisé par le fait que** l'alternateur est à aimants permanents.

8. Dispositif selon l'une quelconque des revendications précédentes, **caractérisé par le fait que** la puissance délivrée par le dispositif est comprise entre 1 et 30 kW.

9. Dispositif selon l'une quelconque des revendications précédentes, **caractérisé par le fait que** le hacheur (9) est en aval du redresseur (6).

10. Dispositif selon la revendication précédente, **caractérisé par le fait que** le hacheur (9) comporte un seul transistor IGBT.

11. Dispositif selon l'une quelconque des revendications précédentes, **caractérisé par le fait que** la fréquence de commutation est constante.

12. Dispositif selon l'une quelconque des revendications précédentes, **caractérisé par le fait que** le hacheur (9) alimente au moins un onduleur (7 ; 8) commandé par un circuit de commande (13) recevant une information représentative de la vitesse de rotation du rotor de l'alternateur.

## Claims

1. Device for producing electricity intended in particular to be stowed on board a vehicle or a container, comprising: a three-phase alternator (10) able to be driven in rotation at a variable speed by a thermal engine, a rectifier (6) for generating a rectified current from the current delivered by the alternator (10) and a voltage-booster chopper (9) using the self-inductance of the alternator (10) to step up the voltage,
**characterized in that** the alternator comprises six or eight poles, **in that** the chopper operates with a switching frequency of preferably between 3 and 15 kHz, and **in that** the self-inductance per phase of the alternator in %, defined by the formula LωI_{N}/V₀, is between 15 and 40%, where L is the self-inductance, per phase of the alternator, ω the angular frequency, I_{N} the nominal current at a given speed and V₀ the no-load voltage of the alternator at this speed.

2. Device according to the preceding claim, **characterized in that** the alternator comprises eight poles.

3. Device according to one of the preceding claims, **characterized in that** the self-inductance per phase of the alternator in % is between 20 and 30%.

4. Device according to one of the preceding claims, its power being of the order of 10 kW, the voltage being 294 volts between phases at 3000 rpm, **characterized in that** the self-inductance of the alternator per phase is less than or equal to 2 mH, preferably less than or equal to 1.5 mH.

5. Device according to one of the preceding claims, its power being of the order of 10 kW, the voltage being 294 volts between phases at 3000 rpm, **characterized in that** the self-inductance of the alternator per phase is greater than or equal to 1 mH.

6. Device according to one of the preceding claims, **characterized in that** the switching frequency of the chopper (9) is less than 8 kHz, preferably of the order of 7.5 kHz.

7. Device according to the preceding claim, **characterized in that** the alternator is of the permanent-magnet type.

8. Device according to any one of the preceding claims, **characterized in that** the power delivered by the device is between 1 and 30 Kw.

9. Device according to any one of the preceding claims, **characterized in that** the chopper (9) is downstream of the rectifier (6).

10. Device according to the preceding claim, **characterized in that** the chopper (9) comprises a single IGBT transistor.

11. Device according to any one of the preceding claims, **characterized in that** the switching frequency is constant.

12. Device according to any one of the preceding claims, **characterized in that** the chopper (9) supplies at least one inverter (7 ; 8) controlled by a control circuit (13) receiving a cue representative of the speed of rotation of the rotor of the alternator.

## Patentansprüche

1. Stromerzeugungsvorrichtung, insbesondere dazu bestimmt, in einem Fahrzeug oder einem Behälter eingelassen zu sein, umfassend einen dreiphasigen Wechselstromgenerator (10), der dazu geeignet ist, von einem Wärmekraftmotor in Rotation mit einer variablen Geschwindigkeit betrieben zu werden, einen Gleichrichter (6) zum Erzeugen eines gleichgerichteten Stroms aus dem vom Wechselstromgenerator (10) gelieferten Strom und einen spannungserhöhenden Zerhacker (9), der die Selbstinduktivität des Wechselstromgenerators (10) zum Erhöhen der Spannung verwendet,
**gekennzeichnet dadurch, dass** der Wechselstromgenerator sechs oder acht Pole aufweist, dass der Zerhacker mit einer Schaltfrequenz zwischen 3 und 15 kHz arbeitet und dass die Selbstinduktivität in % pro Phase des Wechselstromgenerators, definiert durch die Formel LωI_{N}/V₀, zwischen 15 und 40 % liegt, wobei L die Selbstinduktivität pro Phase des Wechselstromgenerators ist, ω die Pulsfrequenz ist, I_{N} der Nominalstrom bei einer gegebenen Geschwindigkeit ist und V₀ die Leerlaufspannung des Wechselstromgenerators bei dieser Geschwindigkeit ist.

2. Vorrichtung nach dem vorhergehenden Anspruch, **gekennzeichnet dadurch, dass** der Wechselstromgenerator acht Pole aufweist.

3. Vorrichtung nach einem der vorhergehenden Ansprüche, **gekennzeichnet dadurch, dass** die Selbstinduktivität in % pro Phase des Wechselstromgenerators zwischen 20 und 30 % liegt.

4. Vorrichtung nach einem der vorhergehenden Ansprüche, bei dem die Leistung von der Ordnung 10 kW ist, die Spannung zwischen den Phasen 294 Volt bei 3000 trs/mn ist, **gekennzeichnet dadurch, dass** die Selbstinduktivität des Wechselstromgenerators pro Phase kleiner gleich 2 mH, vorzugsweise kleiner gleich 1,5 mH, ist.

5. Vorrichtung nach einem der vorhergehenden Ansprüche, bei dem die Leistung in der Ordnung von 10 kW ist, die Spannung zwischen den Phasen 294 Volt bei 3000 trs/mn ist, **gekennzeichnet dadurch, dass** die Selbstinduktivität des Wechselstromgenerators pro Phase größer oder gleich 1 mH ist.

6. Vorrichtung nach einem der vorhergehenden Ansprüche, **gekennzeichnet dadurch, dass** die Taktfrequenz des Zerhackers (9) niedriger als 8 kHz, vorzugsweise in der Ordnung von 5 kHz ist.

7. Vorrichtung nach dem vorhergehenden Anspruch, **gekennzeichnet dadurch, dass** der Wechselstromgenerator einer mit Permanentmagneten ist.

8. Vorrichtung nach einem der vorhergehenden Ansprüche, **gekennzeichnet dadurch, dass** die Ausgangsleistung der Vorrichtung zwischen 1 und 30 kW liegt.

9. Vorrichtung nach einem der vorhergehenden Ansprüche, **gekennzeichnet dadurch, dass** der Zerhacker (9) dem Gleichrichter (6) nachgeschaltet ist.

10. Vorrichtung nach dem vorhergehenden Anspruch, **gekennzeichnet dadurch, dass** der Zerhacker (9) einen einzelnen IGBT-Transistor aufweist.

11. Vorrichtung nach einem der vorhergehenden Ansprüche, **gekennzeichnet dadurch, dass** die Taktfrequenz konstant ist.

12. Vorrichtung nach einem der vorhergehenden Ansprüche, **gekennzeichnet dadurch, dass** der Zerhacker (9) mindestens einen Wechselrichter (7; 8) versorgt, der durch eine Steuerschaltung (13) gesteuert wird, die Informationen erhält, die die Rotationsgeschwindigkeit des Rotors des Wechselstromgenerators angeben.
